# EUROPÄISCHE PATENTSCHRIFT

(11) **EP 2 031 207 B1**
(45) Veröffentlichungstag und Bekanntmachung des Hinweises auf die Patenterteilung: **11.11.2009**
(21) Anmeldenummer: 07115470.2
(22) Anmeldetag: 31.08.2007
(51) Int. Cl.: F01N 11/00

(54) **Verfahren zur Prüfung des Alterungszustandes eines Katalysators an Bord eines Fahrzeugs**
Method for testing the aging state of a catalyst on board of a vehicle
Procédé pour vérifier l'état de vieillissement d'un catalyseur à bord d'un véhicule

(43) Veröffentlichungstag der Anmeldung: 04.03.2009
(73) Patentinhaber: Umicore AG & Co. KG, 63457 Hanau-Wolfgang (DE)
(72) Erfinder: Votsmeier, Martin, 69469 Luetzelsachsen (DE); Gieshoff, Juergen, 63571 Gelnhausen (DE); Kreuzer, Thomas, 61184 Karben (DE)

(56) Entgegenhaltungen:
- EP-A- 1 052 385
- WO-A-01/49989
- WO-A-95/17588
- DE-A1- 4 330 997
- JP-A- 4 060 106

## Beschreibung

Die Erfindung betrifft ein Verfahren zur Prüfung des Alterungszustandes eines Katalysators an einem Fahrzeug. Ein solches Verfahren wird auch als OBD-Verfahren bezeichnet (OBD = On Board Diagnosis). Bei dem zu prüfenden Katalysator handelt es sich bevorzugt um einen Dieseloxidationskatalysator.

Ein häufig verwendetes Maß für den Alterungszustand eines Katalysators ist seine Anspringtemperatur. Mit Anspringtemperatur T₅₀ wird diejenige Temperatur des Katalysators bezeichnet, bei welcher er den betrachteten Schadstoff zu 50 % zu unschädlichen Komponenten umsetzt. Ein Katalysator hat im allgemeinen für jeden Schadstoff eine eigene Anspringtemperatur. Im Falle eines Oxidationskatalysators handelt es sich um die Anspringtemperatur für die Umsetzung von Kohlenmonoxid und um die Anspringtemperatur für die Umsetzung von Kohlenwasserstoffen.

Es existiert eine große Zahl von Vorschlägen zur Überwachung der Aktivität eines Katalysators an einem Fahrzeug. Gemäß der EP 1 136 671 B1 wird zur Überprüfung der verbliebenen katalytischen Aktivität eines Katalysators die Differenz der aktuellen Austrittstemperatur des Katalysators zur Anspringtemperatur des frischen Katalysators für die Umsetzung von Kohlenmonoxid gebildet und außerdem der Umsetzungsgrad für Kohlenmonoxid gemessen. Liegt der gemessene Umsetzungsgrad für Kohlenmonoxid unterhalb eines Grenzwertes während die Katalysatoraustrittstemperatur die Anspringtemperatur des frischen Katalysators um einen vorgebbaren Wert übersteigt, wird dies als Fehlfunktion des Katalysators bewertet.

Die WO 92/03643 schlägt vor, zur Überwachung der katalytischen Aktivität eines Katalysators, der von einem Abgas durchströmt wird, die Temperatur des Katalysators entlang der Strömungsrichtung durchgehend oder an mehreren Meßstellen unter Bildung eines Temperaturmittelwertes sowie die Temperatur des Katalysators an mindestens einer Meßstelle unter Bildung eines Temperaturlokalwertes zu messen und den Temperaturmittelwert mit dem Temperaturlokalwert zur Ableitung einer Aussage über den Zustand des Katalysators zu vergleichen.

Die US 6,408,616 B1 beschreibt ein Verfahren zur Bestimmung der Aktivität eines Katalysators am Fahrzeug. Zu diesem Zweck werden dem Abgas vor dem Katalysator über eine bestimmte Zeit Kohlenwasserstoffe zugeführt und die Temperaturerhöhung durch Verbrennen dieser Kohlenwasserstoffe am Katalysator gemessen. Durch Vergleich mit der erwarteten Temperaturerhöhung kann eine Aussage über den Alterungszustand des Katalysators gemacht werden. Das Verfahren benötigt zur Messung der Abgastemperaturen vor und hinter dem Katalysator je ein Thermoelement. Ein Nachteil dieses Verfahrens ist die Tatsache, daß es nur eine schon vorhandene Schädigung des Katalysators feststellen kann. Es ist mit diesem Verfahren nicht möglich, die zunehmende Alterung des Katalysators zu überwachen. Eine Beurteilung des Katalysators mit diesem Verfahren kann nur bei Abgastemperaturen vorgenommen werden, die nahe der aktuellen Anspringtemperatur des Katalysators liegen. Damit ist jede Messung mit einer erhöhten Emission von unverbrannten Kohlenwasserstoffen verbunden.

Die WO 95/17588 beschreibt ein Verfahren zur Überprüfung der Konvertierungsfähigkeit eines im Abgastrakt angeordneten Katalysators in Kraftfahrzeugen mit Brennkraftmaschinen. Hierzu wird die Temperatur jeweils am Beginn und am Ende einer vorgegebenen Anzahl von Leerlaufphasen im Anschluß an eine Schubphase bei vorgegebenen Betriebszuständen des Kraftfahrzeugs gemessen. Aus den Messungen wird ein Durchschnittstemperaturgradient ermittelt und mit einem vorgegebenen Grenzwert verglichen.

Aufgabe der vorliegenden Erfindung ist es, ein Verfahren zur Prüfung des Alterungszustandes eines Katalysators anzugeben, welches aufgrund einfacher Messungen in der Lage ist, eine Aussage über die Oxidationsaktivität eines Katalysators und seinen Alterungszustand zu machen.

Diese Aufgabe wird durch das Verfahren gemäß Anspruch 1 gelöst. Bevorzugte Ausführungsformen sind in den Unteransprüchen beschrieben.

Das Verfahren gemäß Hauptanspruch betrifft die Prüfung des Alterungszustandes eines Katalysators für die Reinigung der Abgase eines Fahrzeugmotors, wobei das Abgas brennbare Bestandteile enthält und die Prüfung am Fahrzeug unter Betriebsbedingungen vorgenommen wird. Das Verfahren ist dadurch gekennzeichnet, daß ein zeitliches Temperaturprofil des Abgases hinter dem Katalysator gemessen wird und eine Zeitverzögerung zwischen einer Änderung der Betriebsbedingungen und der dadurch hervorgerufenen Änderung der Abgastemperatur hinter dem Katalysator bestimmt und aus der Zeitverzögerung auf den Alterungszustand des Katalysators geschlossen wird, wobei die Verzögerung zwischen dem Beginn der Änderung der Betriebsbedingungen für den Katalysator und dem Auftreten eines charakteristischen Merkmals des zeitlichen Temperaturprofils des Abgases hinter dem Katalysator für die Beurteilung des Alterungszustandes des Katalysators ausgewertet wird und als charakteristisches Merkmal eine ansteigende oder abfallende Flanke des zeitlichen Temperaturprofils oder ein Maximum des zeitlichen Temperaturprofils verwendet wird.

Eine Änderung der Betriebsbedingungen des Katalysators führt zu einer Änderung der im Katalysator erzeugten Wärme infolge der katalytischen Umsetzung der Schadstoffe und damit auch zu einer Änderung der Abgastemperatur hinter dem Katalysator. Dabei reagiert die Abgastemperatur hinter Katalysator verzögert auf die Änderung der Betriebsbedingungen. Diese Verzögerung ist dadurch zu erklären, daß die Reaktionswärme zunächst innerhalb des Katalysators erzeugt wird und durch das Abgas zum Katalysatorausgang transportiert werden nuß. Das Ausmaß der zu beobachtenden Verzögerung hängt von der Lage der Reaktionszone und damit von der Lage des Wärmefreisetzungsprofils im Katalysator ab. Die Lage des Wärmefreisetzungsprofils hängt wiederum vom Aktivitätszustand, beziehungsweise Alterungszustand, des Katalysators ab. Es ist deshalb möglich, aus der meßbaren Verzögerung des zeitlichen Temperaturprofils hinter dem Katalysator auf den Aktivitätszustand des Katalysators zu schließen.

Erfindungsgemäß wird also das zeitliche Temperaturprofil hinter dem Katalysator gemessen, das sich als Folge einer Änderung der Betriebsbedingungen für den Katalysator ergibt. Bevorzugt wird die beobachtete Verzögerung zwischen dem Beginn der Änderung der Betriebsbedingungen und dem Auftreten eines charakteristischen Merkmals des zeitlichen Temperaturprofils des Abgases hinter dem Katalysator für die Beurteilung des Alterungszustandes des Katalysators ausgewertet. Als charakteristisches Merkmal kann eine ansteigende oder abfallende Flanke oder ein Maximum des zeitlichen Temperaturprofils verwendet werden.

Zur praktischen Durchführung des Verfahrens ist es notwendig, die gemessenen zeitlichen Verzögerungen mit der Aktivität des Katalysators zu korrelieren. Eine einfache Lösung ist die Verwendung einer zuvor aufgestellten Tabelle, in welcher der Alterungszustand in Abhängigkeit von der gemessenen Verzögerung eingetragen ist, wobei der Betriebszustand des Katalysators vor Beginn der Prüfung als Parameter dient. Als Maß für den Alterungszustand des Katalysators kann hier zum Beispiel seine aktuelle Anspringtemperatur verwendet werden. Der Betriebszustand des Katalysators wird beschrieben durch Temperatur, Zusammensetzung und Massenstrom des Abgases vor Eintritt in den Katalysator. Diese Parameter hängen direkt von Drehzahl und Last des Motors ab. Die Daten dieser Tabelle können entweder experimentell oder durch Simulationsrechnungen gewonnen werden. Eine weitere Möglichkeit zur Korrelation der gemessenen Verzögerung mit dem Alterungszustand des Katalysators besteht in der Verwendung eines Rechenmodells.

Alternativ kann die Verzögerung des charakteristischen Merkmals für einen Grenzkatalysator berechnet und mit der gemessenen Verzögerung zur Beurteilung des Alterungszustandes des Katalysators verglichen werden. Unter einem Grenzkatalysator wird hier ein Katalysator verstanden, mit dem die Abgasgrenzwerte für die gesetzlich vorgeschriebenen Fahrzyklen gerade noch eingehalten werden. Die US 6,408,616 B1 beschreibt unter anderem wie ein solcher Katalysator hergestellt werden kann.

Bevorzugt werden die Betriebsbedingungen für den Katalysator durch Erhöhen der Konzentration der brennbaren Bestandteile im Abgas vor Eintritt in den Katalysator während einer Zeitdauer Δt geändert. Zu den brennbaren Bestandteilen des Abgases gehören die bekannten Schadstoffe Kohlenmonoxid (CO), Kohlenwasserstoffe (HC) und Wasserstoff (H₂). Die Konzentration an brennbaren Bestandteilen im Abgas kann in einfacher Weise durch motorische Maßnahmen, zum Beispiel durch Nacheinspritzen von Kraftstoff in den Fahrzeugmotor, oder durch Eindüsen von Kraftstoff in das Abgas zwischen Fahrzeugmotor und Katalysator erhöht werden.

Die Erhöhung der Konzentration an brennbaren Bestandteilen des Abgases bestimmt die zu messende Temperaturerhöhung am Ausgang des Katalysators. Für eine sichere Ermittlung des zeitlichen Temperaturprofils ist es daher vorteilhaft, die Konzentrationserhöhung so zu bemessen, daß das Temperaturprofil hinter dem Katalysator eine Amplitude von wenigsten 5 °C, bevorzugt von wenigstens 10 °C aufweist. Besonders bevorzugt wird eine Schadstoffkonzentration gewählt, die eine Amplitude des Temperaturprofils hinter dem Katalysator zwischen 20 und 50 °C gewährleistet. Geht die Amplitude des Temperaturprofils über etwa 50 °C hinaus, besteht die Gefahr, daß der Katalysator durch die Prüfung selber thermisch geschädigt wird.

Besonders geeignet ist eine nur kurzzeitige Erhöhung der Konzentration der brennbaren Bestandteile des Abgases, insbesondere von Kohlenmonoxid und/oder Kohlenwasserstoffen. Die kurzzeitige Erhöhung der Schadstoffkonzentration im Abgas wird im folgenden als Schadstoffpuls oder CO/HC-Puls und der zeitliche Temperaturverlauf hinter dem Katalysator als zeitliches Temperaturprofil bezeichnet. Die Dauer des Schadstoffpulses Δt kann zwischen 1 und 10 Sekunden gewählt werden. Δt sollte auf jeden Fall deutlich kürzer sein als die Zeit, die das axiale Temperaturprofil benötigt, um vom Eingang bis zum Ausgang des Katalysators zu wandern. Bevorzugt sollte Δt nur ein Zehntel bis ein Viertel der Wanderungszeit des Temperaturprofils betragen.

Der zeitliche Verlauf der Abgastemperatur nach Katalysator wird neben der im Katalysator erzeugten Reaktionswärme durch den zeitlichen Verlauf der Abgastemperatur vor Eintritt in den Katalysator beeinflußt. Wie weiter unten gezeigt wird, beträgt die Meßzeit für das Temperaturprofil hinter dem Katalysator unter üblichen Bedingungen etwa 1 Minute. Während dieser Zeit kann sich der Betriebszustand des Fahrzeugmotors ändern und so die Messungen verfälschen. Die Prüfung des Alterungszustandes des Katalysators wird daher bevorzugt vorgenommen, wenn das Fahrzeug mit konstanten Betriebsbedingungen betrieben wird, also zum Beispiel während einer längeren Autobahnfahrt. Ändern sich die Betriebsbedingungen während der Prüfdauer entscheidend, so wird das Prüfergebnis verworfen.

Ein Verwerfen des Prüfergebnisses bei sich ändernden Betriebsbedingungen ist jedoch nicht notwendig, wenn schwankende Betriebsbedingungen des Fahrzeugs während der Prüfung dadurch berücksichtigt werden, daß das erwartete Temperaturprofil hinter dem Katalysator für die Betriebszustände während der Prüfung ohne Erhöhen der Konzentration der brennbaren Bestandteile berechnet und von dem gemessenen Temperaturprofil abgezogen wird.

Im folgenden wird die Erfindung für den Fall erläutert, daß kurze Schadstoffpulse zur Änderung der Betriebsbedingungen des Katalysators eingesetzt werden. Die hierbei vorliegenden Verhältnisse werden an Hand der die Figuren 1 bis 7 erklärt.
- **Figur 1:**: Schematische Darstellung der Schadstoffumsetzung eines Katalysators in Abhängigkeit von seiner Temperatur für drei verschiedene Alterungszustände
- **Figur 2:**: Schematische Darstellung von Schadstoffpuls und zeitlichem Temperaturpro- fil hinter dem Katalysator
- **Figur 3:**: Kohlenmonoxid-Profile im Katalysator für verschiedene Temperaturen ober- halb der Anspringtemperatur
- **Figur 4:**: Wärmefreisetzungsprofile
- **Figur 5:**: Zeitliche Entwicklung des Temperaturprofils im Katalysator
- **Figur 6:**: Zeitliche Entwicklung der Temperatur am Katalysatorausgang nach einem 3 s dauernden CO-Puls
- **Figur 7:**: Darstellung der prinzipiellen Abhängigkeit der Anspringtemperatur von der gemessenen Zeitdifferenz zwischen Beginn der Prüfung und Auftreten des Maximums des zeitlichen Temperaturprofils hinter dem Katalysator

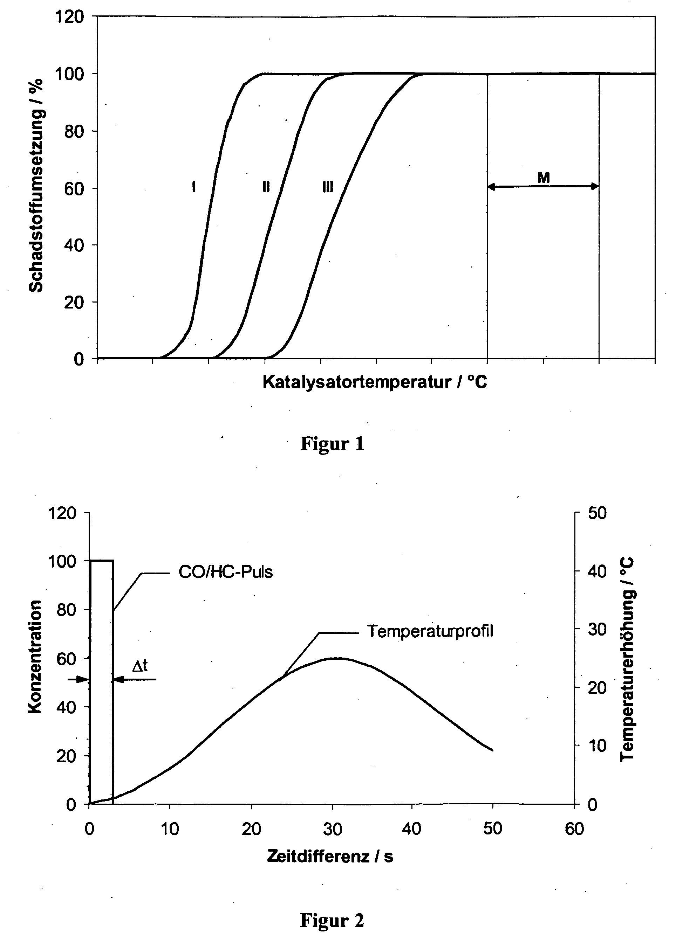

Figur 1 zeigt eine schematische Darstellung der Schadstoffumsetzung (hier die Verbrennung der brennbaren Bestandteile des Abgases) eines Katalysators in Abhängigkeit von der Katalysatortemperatur für drei verschiedene Alterungszustände I, II und III. Aus solchen Kurven können die Anspringtemperaturen für den jeweiligen Alterungszustand ermittelt werden. I bezeichnet zum Beispiel die Umsatzkurve für einen frischen Katalysator, während III die Umsatzkurve für einen stark geschädigten Katalysator ist. In der Regel gibt es auch bei einem Katalysator, dessen Schadstoffumsetzung nicht mehr den gesetzlichen Anforderungen genügt, Temperaturbereiche oberhalb der Anspringtemperatur, in denen die Schadstoffumsetzung noch der Schadstoffumsetzung eines frischen Katalysators nahekommt. Dieser Bereich ist in Figur 1 zum Beispiel mit M bezeichnet.

Bevorzugt wird daher die Prüfung bei Abgastemperaturen vor Eintritt in den Katalysator vorgenommen, die in einem Bereich liegen, in welchem auch der gealterte Katalysator noch Umsätze für die brennbaren Bestandteile wie ein frischer Katalysator aufweist. Hierdurch werden ungewollte Schadstoffemissionen durch die Prüfung weitgehend vermieden, da der Katalysator bei diesen Abgastemperaturen ausreichend aktiv ist, um die für die Prüfung zusätzlich eingebrachten Schadstoffe vollständig umzusetzen.

Die Umsetzung von zum Beispiel Kohlenmonoxid (CO) und Kohlenwasserstoffen (HC) an Edelmetallkatalysatoren wird durch diese Stoffe selbst gehemmt. Die katalytische Umsetzung dieser Abgasbestandteile ist also ein selbstbeschleunigender Vorgang: ist erst einmal ein Teil der Schadstoffe umgesetzt, beschleunigt dies die weitere Reaktion. Aufgrund dieses selbstbeschleunigenden Charakters findet der Umsatz nicht gleichmäßig verteilt über den gesamten Katalysator statt, sondern es kommt längs des Katalysators zur Ausbildung eines örtlich begrenzten, axialen Wärmefreisetzungsprofils und damit zu einem axialen Temperaturprofil im Katalysator.

Liegt die Abgastemperatur bei Eintritt in den Katalysator deutlich über seiner Anspringtemperatur, so werden die brennbaren Bestandteile schon auf einer kurzen Strecke hinter dem Katalysatoreingang vollständig verbrannt und erwärmen den Katalysator längs dieser Strecke. Das Abgas kommt dann stromabwärts mit den noch kühleren Teilen des Katalysators in Kontakt und gibt eventuell mitgeführte Wärme an den Katalysator ab. Das aus dem Katalysator austretende Abgas weist daher kurz nach Beginn des Schadstoffpulses keine Temperaturerhöhung auf, obwohl die Laufzeit des Abgases durch den Katalysator bei den für die Abgasreinigung üblichen Raumgeschwindigkeiten nur Bruchteile von Sekunden beträgt. Erst allmählich wandert das axiale Temperaturprofil nach Beendigung des Schadstoffpulses zum Ausgang des Katalysators. Diese Wanderung erfolgt in Wechselwirkung mit dem durch den Katalysator strömenden Abgas und wird von den thermischen Eigenschaften des Katalysators, insbesondere von seiner Wärmeleitfähigkeit und seiner Wärmekapazität, beeinflußt.

Figur 2 zeigt eine schematische Darstellung von Schadstoffpuls (hier CO/HC-Puls) und Temperaturprofil hinter dem Katalysator in Abhängigkeit von der Zeitdifferenz zwischen dem Beginn des Schadstoffpulses und dem augenblicklichen Zeitpunkt. Die Prüfung beginnt damit, daß die Konzentration der brennbaren Schadstoffbestandteile des Abgases vor Katalysator kurzzeitig während einer Zeitdauer Δt erhöht wird. Gleichzeitig beginnt die Messung der Temperaturerhöhung hinter dem Katalysator. Je aktiver der Katalysator bei der gewählten Abgastemperatur ist, um so später steigt die Temperatur des Abgases hinter dem Katalysator an, denn bei einem aktiven Katalysator werden die zugeführten Schadstoffe schon kurz nach Eintritt in den Katalysator umgesetzt und erhöhen die Temperatur des Katalysators an dieser Stelle. Eine merkliche Temperaturerhöhung des Abgases hinter dem Katalysator tritt erst dann ein, wenn die erwärmte Zone des Katalysators durch Wärmeleitung und durch Wechselwirkung mit dem Abgas bis zum Katalysatorausgang gewandert ist. Entspricht die Abgastemperatur am Eingang des Katalysators dagegen gerade der Anspringtemperatur, so verteilt sich die Umsetzung der Schadstoffe längs des ganzen Katalysators derart, daß am Katalysatorausgang gerade 50 % der Schadstoffe umgesetzt sind. Der Schadstoffumsatz am Ausgang des Katalysators führt wegen der hohen Raumgeschwindigkeit des Abgases zu einem sehr schnellen Anstieg der Abgastemperatur hinter dem Katalysator. Es gilt also: je aktiver der Katalysator bei der Eingangstemperatur des Abgases ist, umso später erreicht das Temperaturprofil des Abgases hinter dem Katalysator sein Maximum.

Diese Zusammenhänge ermöglichen es, aus dem zeitlichen Temperaturprofil hinter dem Katalysator das axiale Wärmefreisetzungsprofil im Katalysator zu ermitteln. Die Berechnungsverfahren hierfür sind dem Fachmann bekannt. Aus dem Wärmefreisetzungsprofil im Katalysator kann schließlich die aktuelle Anspringtemperatur für die zugeführten Schadstoffe ermittelt werden.

Für die Prüfung wird kurzzeitig die Schadstoffkonzentration im Abgas angehoben. Deshalb besteht die Gefahr, daß die Prüfung die Schadstoffemission des Fahrzeugs erhöht. Das kann weitgehend verhindert werden, wenn die Prüfung nur bei Abgastemperaturen durchgeführt wird, die oberhalb der Anspringtemperatur des Katalysators liegen. Die Oxidationsaktivität eines Katalysators nimmt mit zunehmender Alterung ab und die Anspringtemperatur steigt an. Daher wird die Prüfung bevorzugt bei Abgastemperaturen vorgenommen, die größer sind als die während der letzten Prüfung ermittelte aktuelle Anspringtemperatur des Katalysators. Besonders bevorzugt wird die Prüfung bei Abgastemperaturen vorgenommen, die um 10 bis 100 °C, insbesondere um 10 bis 50 °C oberhalb der während der letzten Prüfung ermittelten aktuellen Anspringtemperaturen des Katalysators liegen.

In einer bevorzugten Ausgestaltung des Verfahrens wird die Aufgabe der Erfindung durch folgende Verfahrensschritte gelöst:
a) Zugabe von zusätzlichen brennbaren Bestandteilen zum Abgas vor Eintritt in den Katalysator während einer Zeitdauer Δt,
b) Messen eines zeitlichen Temperaturprofils des Abgases hinter dem Katalysator infolge der Wärmeentwicklung bei der Verbrennung der zusätzlichen brennbaren Bestandteile am Katalysator,
c) Ermitteln einer Zeitdifferenz zwischen dem Beginn der Zugabe der brennbaren Bestandteile und dem Auftreten eines Maximums des Temperaturprofils hinter dem Katalysator und
d) Setzen eines Signals, daß der Katalysator schwerwiegend geschädigt ist, wenn die Zeitdifferenz einen vorgegebenen Wert unterschreitet.

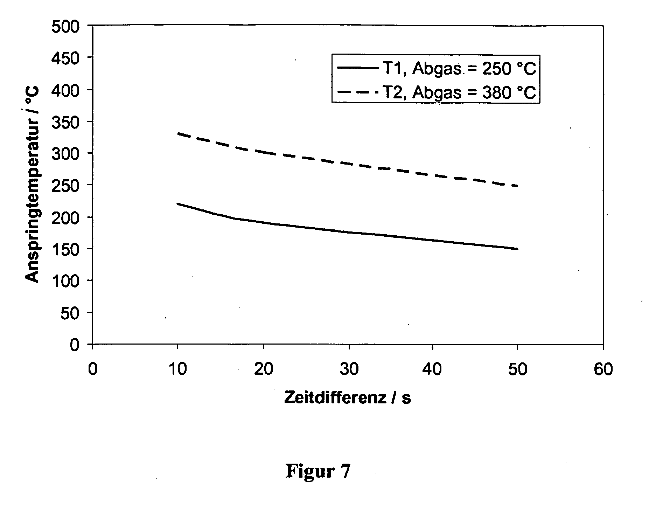

Die aktuelle Anspringtemperatur des Katalysators kann in diesem Fall wie folgt ermittelt werden: Es wird vorab eine Tabelle für den betrachteten Katalysator erstellt, die die Anspringtemperatur des Katalysators für verschiedene Alterungszustände enthält in Abhängigkeit von der erfindungsgemäß gemessenen Zeitdifferenz. Der Betriebszustand des Motors mit Last und Drehzahl dient hierbei als Parameter. Figur 7 zeigt die grafische Darstellung der Daten einer solchen Tabelle, wobei beispielhaft nur die Abgastemperatur vor Beginn der Prüfung als Parameter verwendet wurde. Aus diesem Diagramm kann bei bekannter Eingangstemperatur des Abgases und der gemessenen Zeitdifferenz die aktuelle Anspringtemperatur abgelesen und für die Wahl der Abgastemperatur bei der nächsten Prüfung benutzt werden.

Alternativ kann die aktuelle Anspringtemperatur durch Simulationsrechnungen aus dem gemessenen zeitlichen Temperaturprofil ermittelt werden.

Die Zugabe der zusätzlichen brennbaren Bestandteilen zum Abgas vor Eintritt in den Katalysator kann auf verschiedene Weise erfolgen: durch motorische Maßnahme wie zum Beispiel Nacheinspritzen von Kraftstoff, späte Verbrennungslage oder mehrstufige Verbrennung; durch Eindüsen von Kraftstoff in die Abgasleitung oder durch Zugabe eines durch Reformierung von Kraftstoff erhaltenen wasserstoffreichen Gases.

### Beispiel

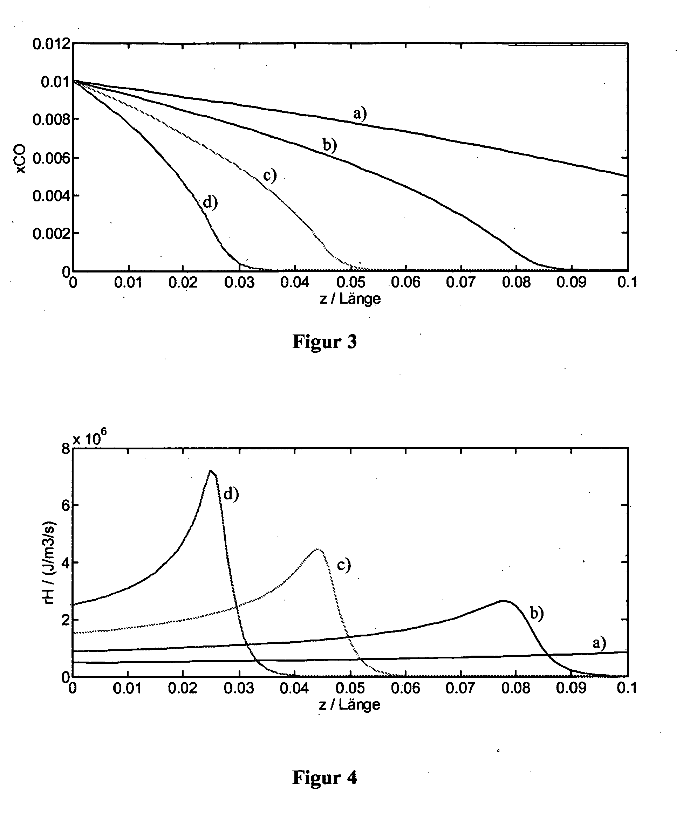

Die Vorgänge im Katalysator während der Prüfung wurden mit Hilfe eines kommerziellen Berechnungsprogrammes untersucht unter der Annahme eines reinen CO-Pulses als Schadstoffpuls. Die Ergebnisse dieser Simulationsrechnungen sind in den folgenden Figuren 3 bis 6 dargestellt und dienen zur weiteren Erläuterung der Erfindung.

Die Figuren 3 und 4 zeigen Konzentrationsprofile für Kohlenmonoxid und die entsprechenden Wärmefreisetzungsprofile im Katalysator für stationäre Abgasbedingungen unter der Annahme einer Anspringtemperatur des Katalysators für Kohlenmonoxid von 200 °C, einer konstanten Konzentration von Kohlenmonoxid vor Katalysator von 1 Vol.-% und einer Raumgeschwindigkeit des Abgases von 36.000 h⁻¹, entsprechend einem zehnmaligen Wechsel des Abgases im Katalysator pro Sekunde. Die Länge des Katalysators wurde zu 10 cm (0,1 m) festgelegt. Die Berechnungen wurden für vier verschiedene Abgastemperaturen vor Eintritt in den Katalysator vorgenommen:
Kurven a): T_{Abgas} = 200 °C (entspricht der Anspringtemperatur)
Kurven b): T_{Abgas} = 220 °C
Kurven c): T_{Abgas} = 240 °C
Kurven d): T_{Abgas} = 260 °C

Figur 3 zeigt die berechneten Konzentrationsprofile von Kohlenmonoxid längs des Katalysators. Ist die Abgastemperatur gleich der Anspringtemperatur (Kurve a)), so ist Kohlenmonoxid definitionsgemäß am Ende des Katalysators nur zu 50 % umgesetzt. Für Temperaturen von 20 °C oberhalb der Anspringtemperatur wird das Kohlenmonoxid schon im Katalysator vollständig umgesetzt. Mit zunehmender Abgastemperatur verschiebt sich die Umsetzung immer mehr zum Katalysatoreingang. Deutlich ist dabei die Selbstbeschleunigung der Oxidation von Kohlenmonoxid mit zunehmendem Umsatz von Kohlenmonoxid am Edelmetallkatalysator erkennbar: Die Umsetzung von Kohlenmonoxid wird mit geringer werdender Konzentration im Abgas beschleunigt.

Figur 4 zeigt die sich aus den Konzentrationsprofilen von Figur 3 ergebenden Wärmefreisetzungsprofile. Auch hier beobachtet man, daß die Wärmefreisetzung nicht gleichmäßig über den gesamten Katalysator sondern örtlich begrenzt erfolgt. Für Abgastemperaturen oberhalb der Anspringtemperatur ist aufgrund der Selbstbeschleunigung ein deutlich ausgeprägtes Maximum zu erkennen. Die Lage des Maximums verschiebt sich mit zunehmender Abgastemperatur Richtung Eingang des Katalysators.

Prinzipiell ist es also möglich, durch Messen des Temperaturprofils längs des Katalysators eine Aussage über die Anspringtemperatur des Katalysators zu erhalten. Zu diesem Zweck muß jedoch das Temperaturprofil ausreichend genau mit Hilfe mehrerer Meßstellen längs des Katalysators ermittelt werden. Das ist technisch aufwendig und mit erheblichen Kosten verbunden.

Erfindungsgemäß wird dagegen nur das zeitliche Temperaturprofil hinter dem Katalysator mit einer Temperaturmeßsonde gemessen. Sie kann leicht an einem Ort angebracht werden, an welchem alle aus dem Katalysator austretenden Strömungsfäden gut miteinander vermischt sind und so eine verläßliche Temperaturmessung erlauben. Die Messung des zeitlichen Temperaturprofils hinter dem Katalysator macht es jedoch notwendig, den Katalysator mit einer kurzzeitig höheren Konzentration an verbrennbaren Abgaskomponenten zu belasten. Die dabei entstehende zeitliche Änderung der Abgastemperatur hinter dem Katalysator kann dann leicht vermessen werden.

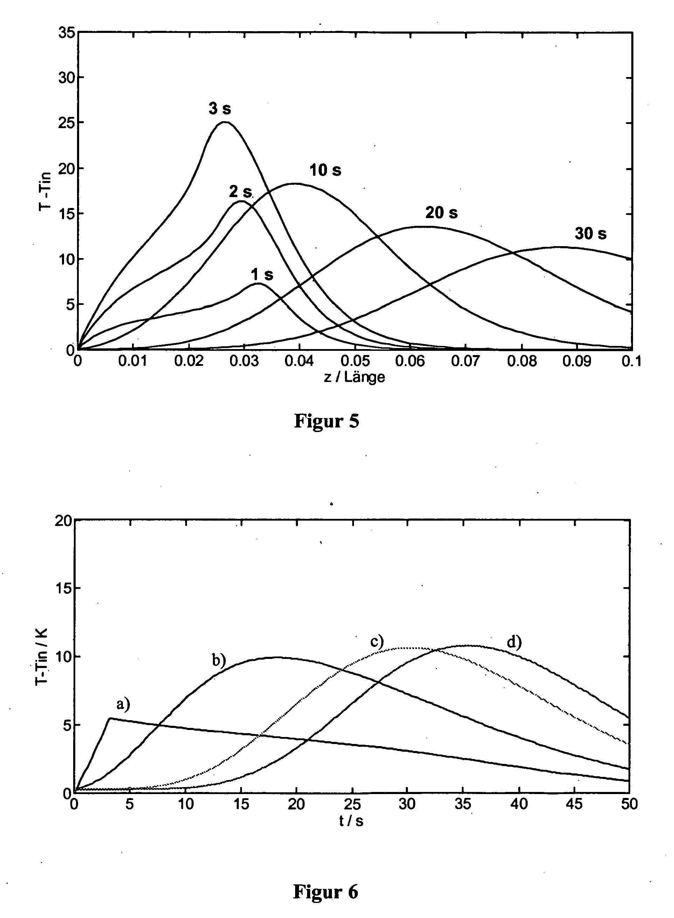

Für die Simulationsrechnungen der Figuren 5 und 6 wurden die gleichen Voraussetzungen bezüglich Anspringtemperatur, Raumgeschwindigkeit und Katalysatorlänge getroffen wie für die stationären Berechnungen der Figuren 3 und 4. Abweichend von den stationären Berechnungen wurde jetzt nur eine pulsartige Zugabe von Kohlenmonoxid zum Abgas vor dem Katalysator angenommen mit einer Pulsdauer von 3 Sekunden und einer Konzentration von Kohlenmonoxid im Puls von 1 Vol.-%.

Figur 5 zeigt die berechneten axialen Profile der Katalysatortemperatur für eine Abgastemperatur vor Katalysator von 240 °C und verschiedene Zeiten nach Beginn des CO-Pulses. Auf der Ordinate ist die Differenz der am jeweiligen Ort längs des Katalysators herrschenden Katalysatortemperatur T zur Abgastemperatur vor Katalysator Tᵢₙ aufgetragen. Da die Abgastemperatur Tᵢₙ deutlich oberhalb der Anspringtemperatur (200 °C) liegt, wird das Kohlenmonoxid des CO-Pulses schon in der ersten Hälfte des Katalysators vollständig verbrannt und erzeugt ein axiales Temperaturprofil im Katalysator, das im wesentlichen dem Wärmefreisetzungsprofil entspricht. In Wechselwirkung mit dem Abgas und infolge der thermischen Eigenschaften des Katalysatorkörpers wandert das Temperaturprofil im Katalysator stromabwärts zum Katalysatorausgang und verbreitert sich dabei. Nach etwa 30 Sekunden hat das Maximum des Temperaturprofils den Katalysatorausgang erreicht.

Am Ausgang des Katalysators kann das örtliche Temperaturprofil als zeitabhängiges Temperaturprofil vermessen werden. Die sich ergebenden zeitlichen Temperaturprofile hinter dem Katalysator sind in Figur 6 für die oben angeführten vier verschiedenen Abgastemperaturen vor Katalysator a), b), c) und d) dargestellt. Je weiter oberhalb der Anspringtemperatur des Katalysators die Abgastemperatur liegt, umso größer ist die Zeitdifferenz zwischen dem Start der Kohlenmonoxidzugabe und dem Auftreten des Maximums des zeitlichen Temperaturprofils hinter dem Katalysator.

Das erfindungsgemäße Verfahren benötigt wenigstens einen Temperatursensor zur Messung der Abgastemperatur hinter dem Katalysator. Die Abgastemperatur vor Katalysator wird bevorzugt von der Motorsteuerung aus den aktuellen Betriebsdaten des Motors berechnet. Alternativ kann auch ein zweiter Temperatursensor vor dem Katalysator vorgesehen werden. An die Temperatursensoren, insbesondere an den Temperatursensor hinter dem Katalysator, werden bezügliche Meßgenauigkeit und Langzeitstabilität nur geringe Anforderungen gestellt, da es im wesentlichen nicht auf die absolute Höhe der Temperatur ankommt, sondern nur auf die zeitliche Verzögerung zum Beispiel des Auftretens des Maximums des Temperaturverlaufs.

Es ist ein Vorteil des vorgeschlagenen Verfahrens, daß bei einer Temperatur deutlich oberhalb der Anspringtemperatur gearbeitet werden kann, so daß auch im Fall eines geschädigten Katalysators während der Prüfung noch ein vollständiger Umsatz des Schadstoffpulses erzielt wird. Auf diese Weise können zusätzliche Emissionen durch die Prüfung vermieden werden.

## Patentansprüche

1. Verfahren zur Prüfung des Alterungszustandes eines Katalysators für die Reinigung der Abgase eines Fahrzeugmotors, wobei das Abgas brennbare Bestandteile enthält und die Prüfung am Fahrzeug unter Betriebsbedingungen vorgenommen wird,
**dadurch gekennzeichnet,**
**daß** ein zeitliches Temperaturprofil des Abgases hinter dem Katalysator gemessen wird und eine Zeitverzögerung zwischen einer Änderung der Betriebsbedingungen und der **dadurch** hervorgerufenen Änderung der Abgastemperatur hinter dem Katalysator bestimmt und aus der Zeitverzögerung auf den Alterungszustand des Katalysators geschlossen wird, wobei die Verzögerung zwischen dem Beginn der Änderung der Betriebsbedingungen für den Katalysator und dem Auftreten eines charakteristischen Merkmals des zeitlichen Temperaturprofils des Abgases hinter dem Katalysator für die Beurteilung des Alterungszustandes des Katalysators ausgewertet wird und als charakteristisches Merkmal eine ansteigende oder abfallende Flanke des zeitlichen Temperaturprofils oder ein Maximum des zeitlichen Temperaturprofils verwendet wird.

2. Verfahren nach Anspruch 1,
**dadurch gekennzeichnet,**
**daß** der Alterungszustand des Katalysators aus der gemessenen Verzögerung mit Hilfe einer zuvor aufgestellten Tabelle ermittelt wird, in welcher der Alterungszustand in Abhängigkeit von der gemessenen Verzögerung eingetragen ist, wobei der Betriebszustand des Katalysators vor Beginn der Prüfung als Parameter dient.

3. Verfahren nach Anspruch 2,
**dadurch gekennzeichnet,**
**daß** die Daten in der Tabelle experimentell oder durch Simulationsrechnungen ermittelt werden.

4. Verfahren nach Anspruch 1,
**dadurch gekennzeichnet,**
**daß** der Alterungszustand des Katalysators aus der gemessenen Verzögerung mit Hilfe eines Rechenmodells bestimmt wird.

5. Verfahren nach Anspruch 1,
**dadurch gekennzeichnet,**
**daß** die Verzögerung des charakteristischen Merkmals für einen Grenzkatalysator berechnet und mit der gemessenen Verzögerung zur Beurteilung des Alterungszustandes des Katalysators verglichen wird.

6. Verfahren nach einem der vorstehenden Ansprüche,
**dadurch gekennzeichnet,**
**daß** die Betriebsbedingungen des Katalysators für die Prüfung durch Erhöhen der Konzentration der brennbaren Bestandteile im Abgas vor Eintritt in den Katalysator während einer Zeitdauer Δt geändert werden.

7. Verfahren nach Anspruch 6,
**dadurch gekennzeichnet,**
**daß** die brennbaren Bestandteile Kohlenmonoxid und/oder Kohlenwasserstoffe enthalten.

8. Verfahren nach Anspruch 7,
**dadurch gekennzeichnet,**
**daß** die Konzentration der brennbaren Bestandteile im Abgas durch Nacheinspritzen von Kraftstoff in den Fahrzeugmotor oder durch Eindüsen von Kraftstoff in das Abgas zwischen Fahrzeugmotor und Katalysator erhöht wird.

9. Verfahren nach Anspruch 6,
**dadurch gekennzeichnet,**
**daß** die Konzentration der brennbaren Bestandteile im Abgas so stark erhöht wird, daß das Temperaturprofil hinter dem Katalysator eine Amplitude von wenigstens 5 °C infolge der Verbrennung am Katalysator aufweist.

10. Verfahren nach Anspruch 6,
**dadurch gekennzeichnet,**
**daß** die Zeitdauer Δt zwischen 1 und 10 Sekunden gewählt wird.

11. Verfahren nach Anspruch 6,
**dadurch gekennzeichnet,**
**daß** die Prüfung des Alterungszustandes vorgenommen wird, wenn das Fahrzeug mit konstanten Betriebsbedingung betrieben wird.

12. Verfahren nach Anspruch 6,
**dadurch gekennzeichnet,**
**daß** schwankende Betriebsbedingungen des Fahrzeugs während der Prüfung **dadurch** berücksichtigt werden, daß das erwartete Temperaturprofil hinter dem Katalysator für die Betriebszustände während der Prüfung ohne Erhöhen der Konzentration der brennbaren Bestandteile berechnet und von dem gemessenen Temperaturprofil abgezogen wird.

13. Verfahren nach Anspruch 1,
**dadurch gekennzeichnet,**
**daß** die Prüfung nur bei Abgastemperaturen vor Katalysator vorgenommen wird, die in einem Bereich liegen, in welchem auch der gealterte Katalysator noch Umsätze für die brennbaren Bestandteile ähnlich wie ein frischer Katalysator aufweist.

14. Verfahren nach Anspruch 1,
**gekennzeichnet durch die Schritte,**
e) Zugabe von zusätzlichen brennbaren Bestandteilen zum Abgas vor Eintritt in den Katalysator während einer Zeitdauer Δt,
f) Messen eines zeitlichen Temperaturprofils des Abgases hinter dem Katalysator infolge der Wärmeentwicklung bei der Verbrennung der zusätzlichen brennbaren Bestandteile am Katalysator,
g) Ermitteln einer Zeitdifferenz zwischen dem Beginn der Zugabe der brennbaren Bestandteile und dem Auftreten eines Maximums des Temperaturprofils hinter dem Katalysator und
h) Setzen eines Signals, daß der Katalysator schwerwiegend geschädigt ist, wenn die Zeitdifferenz einen vorgegebenen Wert unterschreitet.

15. Verfahren nach Anspruch 14,
**dadurch gekennzeichnet,**
**daß** die aktuelle Anspringtemperatur des Katalysators mit Hilfe der gemessenen Zeitdifferenz zwischen dem Beginn der Zugabe der brennbaren Bestandteile und dem Auftreten eines Maximums des Temperaturprofils hinter dem Katalysator aus einer zuvor erstellten Tabelle entnommen wird, in der die Anspringtemperaturen in Abhängigkeit von der gemessenen Zeitdifferenz eingetragen sind, wobei der Betriebszustand des Motors als Parameter dient.

16. Verfahren nach Anspruch 15,
**dadurch gekennzeichnet,**
**daß** die Prüfung nur bei Abgastemperaturen vor Katalysator vorgenommen wird, die größer sind als die während der letzten Prüfung ermittelte aktuelle Anspringtemperatur des Katalysators.

17. Verfahren nach Anspruch 16,
**dadurch gekennzeichnet,**
**daß** die Prüfung nur bei Abgastemperaturen vor Katalysator vorgenommen wird, die um 10 bis 100 °C oberhalb der während der letzten Prüfung ermittelten aktuellen Anspringtemperatur des Katalysators liegen.

## Claims

1. Method for testing the ageing condition of a catalyst for cleaning the exhaust gases of a vehicle engine, the exhaust gas containing combustible components and testing being carried out on the vehicle under operating conditions, **characterized in that** a temperature profile with respect to time of the exhaust gas downstream of the catalyst is measured and a delay between a change in the operating conditions and the resulting change in the exhaust-gas temperature downstream of the catalyst is determined, and the ageing condition of the catalyst is inferred from the delay, the delay between the beginning of the change in the operating conditions for the catalyst and the occurrence of a characteristic feature of the temperature profile with respect to time of the exhaust gas downstream of the catalyst being evaluated to assess the ageing condition of the catalyst, and a rising or falling flank of the temperature profile with respect to time or a maximum in the temperature profile with respect to time being used as the characteristic feature.

2. Method according to Claim 1, **characterized in that** the ageing condition of the catalyst is obtained from the measured delay with the aid of a table created beforehand, in which the ageing condition is entered as a function of the measured delay, the operating condition of the catalyst before the beginning of the test being used as a parameter.

3. Method according to Claim 2, **characterized in that** the data in the table are obtained experimentally or by means of simulation calculations.

4. Method according to Claim 1, **characterized in that** the ageing condition of the catalyst is determined from the measured delay with the aid of a mathematical model.

5. Method according to Claim 1, **characterized in that** the delay of the characteristic feature for a threshold catalyst is calculated and compared with the measured delay to assess the ageing condition of the catalyst.

6. Method according to one of the preceding claims, **characterized in that** the operating conditions of the catalyst are changed for the test by increasing the concentration of combustible components in the exhaust gas before entry to the catalyst during a time period Δt.

7. Method according to Claim 6, **characterized in that** the combustible components contain carbon monoxide and/or hydrocarbons.

8. Method according to Claim 7, **characterized in that** the concentration of combustible components in the exhaust gas is increased by after-injection of fuel into the vehicle engine or by introducing fuel into the exhaust gas between the vehicle engine and the catalyst.

9. Method according to Claim 6, **characterized in that** the concentration of combustible components in the exhaust gas is increased to such an extent that the temperature profile downstream of the catalyst has an amplitude of at least 5° C owing to combustion at the catalyst.

10. Method according to Claim 6, **characterized in that** the time period Δt selected is between 1 and 10 seconds.

11. Method according to Claim 6, **characterized in that** testing of the ageing condition is carried out when the vehicle is being operated under constant operating conditions.

12. Method according to Claim 6, **characterized in that** fluctuating operating conditions of the vehicle during testing are taken into account by the fact that, for the operating conditions during testing, the expected temperature profile downstream of the catalyst is calculated without increasing the concentration of combustible components and is subtracted from the measured temperature profile.

13. Method according to Claim 1, **characterized in that** testing is performed only at exhaust-gas temperatures upstream of the catalyst in a range in which even the aged catalyst still exhibits conversion rates for the combustible components similar to a fresh catalyst.

14. Method according to Claim 1, **characterized by** the following steps:
e) addition of additional combustible components to the exhaust gas before entry into the catalyst during a time period Δt,
f) measurement of a temperature profile with respect to time of the exhaust gas downstream of the catalyst owing to the development of heat during the combustion of the additional combustible components at the catalyst,
g) obtaining a time difference between the beginning of addition of the combustible components and the occurrence of a maximum in the temperature profile downstream of the catalyst, and
h) setting a signal to indicate that the catalyst is severely damaged if the time difference falls below a predetermined value.

15. Method according to Claim 14, **characterized in that** the measured time difference between the beginning of addition of the combustible components and the occurrence of a maximum in the temperature profile downstream of the catalyst is used to obtain the current light-off temperature of the catalyst from a table created beforehand, in which the light-off temperatures are entered as a function of the measured time difference, the operating condition of the engine being used as a parameter.

16. Method according to Claim 15, **characterized in that** testing is carried out only at exhaust-gas temperatures upstream of the catalyst which are greater than the current light-off temperature of the catalyst ascertained during the previous test.

17. Method according to Claim 16, **characterized in that** testing is carried out only at exhaust-gas temperatures upstream of the catalyst which are 10 to 100° C above the current light-off temperature of the catalyst ascertained during the previous test.

## Revendications

1. Procédé de vérification de l'état de vieillissement d'un catalyseur destiné à épurer les gaz d'échappement du moteur d'un véhicule, les gaz d'échappement contenant des composants combustibles et la vérification étant réalisée sur le véhicule dans des conditions de fonctionnement,
**caractérisé en ce que**
un profil temporel de la température des gaz d'échappement en aval du catalyseur est mesuré et le retard entre une modification des conditions de fonctionnement et la modification ainsi provoquée de la température des gaz d'échappement en aval du catalyseur est déterminé,
**en ce qu'**à partir du retard, on tire une conclusion sur l'état de vieillissement du catalyseur, le retard entre le début de la modification des conditions de fonctionnement pour le catalyseur et l'apparition d'un élément caractéristique du profil temporel de température des gaz d'échappement en aval du catalyseur étant évalué pour juger de l'état de vieillissement du catalyseur et
**en ce que** comme élément caractéristique, on utilise un flanc montant ou descendant du profil temporel de température ou un maximum du profil temporel de température.

2. Procédé selon la revendication 1, **caractérisé en ce que** l'état de vieillissement du catalyseur est déterminé à partir du retard mesuré et à l'aide d'un tableau établi préalablement et dans lequel l'état de vieillissement est reporté en fonction du retard mesuré, l'état de fonctionnement du catalyseur avant le début de la vérification servant de paramètre.

3. Procédé selon la revendication 2, **caractérisé en ce que** les données reprises dans le tableau sont déterminées expérimentalement ou par des calculs de simulation.

4. Procédé selon la revendication 1, **caractérisé en ce que** l'état de vieillissement du catalyseur est déterminé à partir du retard mesuré à l'aide d'un modèle de calcul.

5. Procédé selon la revendication 1, **caractérisé en ce que** pour juger de l'état de vieillissement du catalyseur, le retard de l'élément caractéristique pour un catalyseur limite est calculé et est comparé au retard mesuré.

6. Procédé selon l'une des revendications précédentes, **caractérisé en ce que** les conditions de fonctionnement du catalyseur lors de la vérification sont modifiées pendant une durée Δt par augmentation de la concentration des composants combustibles dans les gaz d'échappement avant qu'ils pénètrent dans le catalyseur.

7. Procédé selon la revendication 6, **caractérisé en ce que** les composants combustibles contiennent du monoxyde de carbone et/ou des hydrocarbures.

8. Procédé selon la revendication 7, **caractérisé en ce que** la concentration des composants combustibles des gaz d'échappement est augmentée par post-injection de carburant dans le moteur du véhicule ou par injection de carburant dans les gaz d'échappement entre le moteur du véhicule et le catalyseur.

9. Procédé selon la revendication 6, **caractérisé en ce que** la concentration des composants combustibles dans les gaz d'échappement est augmentée suffisamment pour que le profil de température en aval du catalyseur présente une amplitude d'au moins 5°C suite à la combustion qui s'établit sur le catalyseur.

10. Procédé selon la revendication 6, **caractérisé en ce que** la durée Δt sélectionnée est comprise entre 1 et 10 secondes.

11. Procédé selon la revendication 6, **caractérisé en ce que** la vérification de l'état de vieillissement est réalisée en faisant fonctionner le véhicule dans des conditions de fonctionnement constantes.

12. Procédé selon la revendication 6, **caractérisé en ce que** pendant la vérification, on tient compte de variations des conditions de fonctionnement du véhicule en calculant le profil attendu du température en aval du catalyseur pour les conditions de fonctionnement utilisées lors de la vérification, sans augmenter la concentration des composants combustibles, et en le déduisant du profil de température mesuré.

13. Procédé selon la revendication 1, **caractérisé en ce que** la vérification n'est réalisée que lorsque les gaz d'échappement présentent en amont du catalyseur une température située dans une plage dans laquelle même un catalyseur vieilli présente encore un taux de conversion des composants combustibles similaire à celui d'un catalyseur frais.

14. Procédé selon la revendication 1, **caractérisé par** les étapes qui consistent à :
e) pendant une durée Δt, ajouter des composants combustibles supplémentaires aux gaz d'échappement avant qu'ils pénètrent dans le catalyseur,
f) mesurer un profil temporel de température des gaz d'échappement en aval du catalyseur suite au dégagement de chaleur lors de la combustion des composants combustibles supplémentaires sur le catalyseur,
g) déterminer la différence de temps entre le début de l'addition de composants combustibles et l'apparition d'un maximum dans le profil de température en aval du catalyseur et
h) délivrer un signal indiquant que le catalyseur est gravement endommagé lorsque la différence de temps n'atteint pas une valeur prédéterminée.

15. Procédé selon la revendication 14, **caractérisé en ce que** la température effective de démarrage du catalyseur est reprise dans un tableau établi préalablement, à l'aide de la différence de temps mesurée entre le début de l'addition des composants combustibles et l'apparition d'un maximum dans le profil de température en aval du catalyseur, le tableau contenant les températures de démarrage en fonction de la différence de temps mesurée et l'état de fonctionnement du moteur servant de paramètre.

16. Procédé selon la revendication 15, **caractérisé en ce que** la vérification n'est réalisée que lorsque la température des gaz d'échappement en amont du catalyseur est supérieure à la température effective de démarrage du catalyseur déterminée pendant la dernière vérification.

17. Procédé selon la revendication 16, **caractérisé en ce que** la vérification n'est réalisée que lorsque la température des gaz d'échappement en amont du catalyseur est de 10 à 100°C au-dessus de la température effective de démarrage du catalyseur déterminée lors de la dernière vérification.
